(19) Europäisches Patentamt
European Patent Office
Office européen des brevets

(11) **EP 4 270 729 A1**

(12) **EUROPEAN PATENT APPLICATION**
published in accordance with Art. 153(4) EPC

(43) Date of publication:
**01.11.2023 Bulletin 2023/44**

(21) Application number: **21910245.6**

(22) Date of filing: **06.12.2021**

(51) International Patent Classification (IPC):
*H02J 13/00* (2006.01)     *G06Q 50/30* (2012.01)
*H02J 3/00* (2006.01)      *H02J 3/38* (2006.01)
*G06Q 10/04* (2023.01)

(52) Cooperative Patent Classification (CPC):
**G06Q 10/04; G06Q 50/30; H02J 3/00; H02J 3/38;
H02J 13/00**

(86) International application number:
**PCT/JP2021/044615**

(87) International publication number:
**WO 2022/138095 (30.06.2022 Gazette 2022/26)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **25.12.2020 JP 2020215969**

(71) Applicant: **Hitachi, Ltd.**
**Chiyoda-ku**
**Tokyo 100-8280 (JP)**

(72) Inventors:
• **JO, Mingyu**
  **Tokyo 100-8280 (JP)**
• **ISHII, Yoshikazu**
  **Tokyo 100-8280 (JP)**
• **SAITO, Nao**
  **Tokyo 100-8280 (JP)**

(74) Representative: **Mewburn Ellis LLP**
**Aurora Building**
**Counterslip**
**Bristol BS1 6BX (GB)**

(54) **STATE PREDICTION SYSTEM, STATE PREDICTION METHOD, AND PROGRAM**

(57)     Provided is a state prediction system or the like that appropriately predicts a state of a device to be charged and discharged. A state prediction system (11) includes a behavior feature extraction unit (2) that, based on behavior historical data and charging rate historical data of a device, extracts a feature of behavior of the device; a behavior rule extraction unit (3) that extracts, based on a predetermined feature, a behavior rule of the device; a behavior rule correction unit (4) that corrects the behavior rule based on a predetermined input operation by referring to a display unit (11f) displaying the behavior rule; and a prediction unit (5) that, in a case where the behavior rule is corrected by the behavior rule correction unit (4), predicts a future state of the device based on the corrected behavior rule.

*FIG. 3*

**Description**

Technical Field

The present invention relates to a state prediction system or the like.

Background Art

In addition to power generation facilities and power storage facilities, technology for supplying power in response to energy supply and demand has been introduced to distributed energy supply and demand systems that include a load such as an electric vehicle, and a variety of services have been proposed. For example, Patent Literature 1 discloses "...extracting, as adjusted power blocks, an optimal power consumption amount block and time-zone and time-length blocks, based on predicted power consumption and the reliability in each unit measurement period". Further, Patent Literature 2 indicates that, in a usage prediction device of a power storage means, "... the control is performed in the system based on the usage status specified period predicted by predicting means".

Citation List

Patent Literatures

PTL 1: JP 6574466 A
PTL 2: JP 5911783 A

Summary of Invention

Technical Problem

In the technology disclosed in Patent Literature 1 and 2, historical data on power consumption and so forth is used in order to predict a future state of a distributed energy supply and demand system. However, in a case where the operation of the distributed energy supply and demand system (the power supply timing, supply amount, and the like) changes, there is no appropriate historical data corresponding thereto, and thus it is difficult to predict a future state. It is desirable to be able to appropriately predict the state of a device receiving a supply of power even in a case where the operation of the distributed energy supply and demand system has changed, but such technology is not disclosed in Patent Literature 1 or 2.

Therefore, an object of the present invention is to provide a state prediction system or the like that appropriately predicts a state of a device to be charged and discharged.

Solution to Problem

In order to solve the foregoing problem, the present invention includes a behavior feature extraction unit that, based on behavior historical data representing a history of device behavior and charging rate historical data representing a history of charging rates of a battery of the device, extracts a feature of behavior of the device, wherein human operation is involved in at least some of the behavior of the device, wherein the feature includes information specifying the time and the charging rate when the device starts a predetermined behavior, and the time and the charging rate when the device ends the behavior, the present invention further including

a behavior rule extraction unit that extracts, based on the feature, a predetermined behavior rule indicating a charging/discharging timing and a charge/discharge amount as a trend in the charging/discharging of the battery accompanying the behavior of the device; a behavior rule correction unit that corrects the behavior rule based on a predetermined input operation by referring to a display unit displaying the behavior rule; and
a prediction unit that, in a case where the behavior rule is corrected by the behavior rule correction unit, predicts a future state of the device based on the corrected behavior rule.

Advantageous Effects of Invention

According to the present invention, it is possible to provide a state prediction system or the like that appropriately predicts a state of a device to be charged and discharged.

Brief Description of Drawings

[FIG. 1] FIG. 1 is a configuration diagram including a state prediction system according to a first embodiment.
[FIG. 2] FIG. 2 is a configuration diagram including a hardware configuration of the state prediction system according to the first embodiment.
[FIG. 3] FIG. 3 is a functional block diagram of the state prediction system according to the first embodiment.
[FIG. 4] FIG. 4 is an explanatory diagram of SoC historical data of an electric vehicle in the state prediction system according to the first embodiment.
[FIG. 5] FIG. 5 is an explanatory diagram of temporal changes in the SoC of an electric vehicle in the state prediction system according to the first embodiment.
[FIG. 6] FIG. 6 is an explanatory diagram of behavior historical data of an electric vehicle in the state prediction system according to the first embodiment.
[FIG. 7] FIG. 7 is a flowchart of processing executed by the state prediction system according to the first embodiment.
[FIG. 8] FIG. 8 is a flowchart of processing executed by the state prediction system according to the first embodiment.
[FIG. 9] FIG. 9 is an explanatory diagram in a case where four types of features of electric vehicle behavior are plotted in the state prediction system according to the first embodiment.
[FIG. 10] FIG. 10 is an explanatory diagram of a result of clustering data of features of electric vehicle behavior in the state prediction system according to the first embodiment.
[FIG. 11] FIG. 11 is a display example of behavior rules of an electric vehicle in the state prediction system according to the first embodiment.
[FIG. 12] FIG. 12 is a conceptual view of processing by a prediction unit in the state prediction system according to the first embodiment.
[FIG. 13] FIG. 13 is a functional block diagram of a state prediction system 11A according to a third embodiment.
[FIG. 14] FIG. 14 is a flowchart of processing executed by the state prediction system according to the third embodiment.
[FIG. 15] FIG. 15 is a flowchart of processing executed by the state prediction system according to the third embodiment.
[FIG. 16] FIG. 16 is a functional block diagram of a state prediction system according to a fourth embodiment.

Description of Embodiments

<<First Embodiments

<Configuration of State Prediction System>

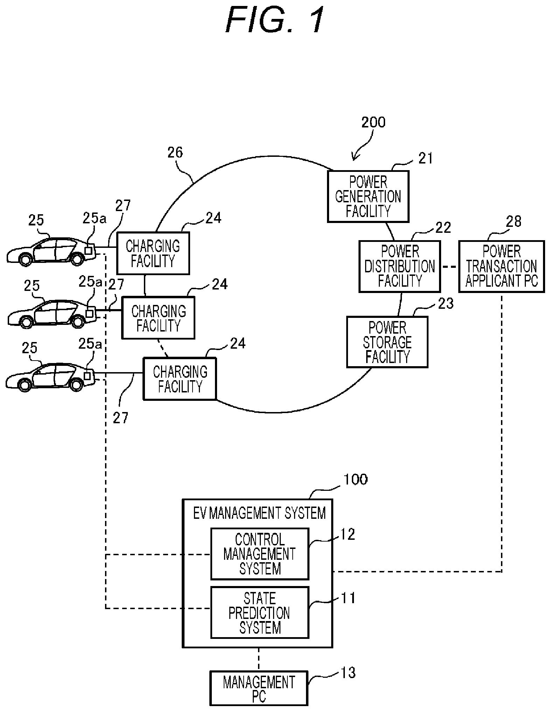

FIG. 1 is a configuration diagram including a state prediction system 11 according to a first embodiment.
A state prediction system 11 is a system that predicts a future state of an electric vehicle 25 (device and mobile body) in a distributed energy supply and demand system 200. Prior to describing the state prediction system 11, the distributed energy supply and demand system 200 that includes the electric vehicle 25 will first be described in simple terms below.
As illustrated in FIG. 1, the distributed energy supply and demand system 200 is configured to include a plurality of charging facilities 24 and electric vehicles 25 in addition to a power generation facility 21, a power distribution facility 22, and a power storage facility 23. Furthermore, the power generation facility 21, the power distribution facility 22, the power storage facility 23, and the charging facilities 24 are connected in a predetermined manner via a power line 26. Further, the electric power generated by the power generation facility 21 is supplied to the power storage facility 23 and the charging facilities 24 in a predetermined manner via the power distribution facility 22 and the like.
The charging facility 24 is a facility for charging a battery 25a of the electric vehicle 25. For example, in a case where a connector (not illustrated) of a charging cable 27 is inserted into a charging port (not illustrated) of the electric vehicle 25 and a predetermined operation is performed by a user, power is supplied from the charging facility 24 to the electric vehicle 25 via the charging cable 27. As a result, the state of charge (SoC) of the battery 25a of the electric vehicle 25 increases. In a case where charging of the battery 25a is completed, the user removes the charging cable 27 from the charging port of the electric vehicle 25.
Note that, when the electric vehicle 25 is connected to the charging facility 24 via the charging cable 27, predetermined communication (wired communication or wireless communication) is performed via the charging facility 24 between the electric vehicle 25 and an EV management system 100. Details of the information exchanged in this communication will be described below.

The electric vehicle 25 is a vehicle that travels using the battery 25a as the main driving source. Such an electric vehicle 25 may, for example, also be used as a taxi or a bus in addition to being used for the delivery of goods or for mail delivery. The electric vehicle 25 performs predetermined communication with the EV management system 100 (see the broken line in FIG. 1). Such an electric vehicle 25 is not particularly required to be fully self-driving, and is driven by a driver. That is, human operation is involved in at least some of the behavior of the electric vehicle 25 (device). Therefore, a movement route, a travel speed, a stop position, a standby time, and the like, are different depending on the driver and the situation (the area, weather, time zone, dealing with customers, and so forth) .

The EV management system 100 not only manages the electric vehicle 25 but also has a function for predicting future charging/discharging timings and charge/discharge amounts of the electric vehicle 25. As illustrated in FIG. 1, the EV management system 100 includes a state prediction system 11 and a control management system 12. As described above, the state prediction system 11 is a system that predicts a future state of the electric vehicle 25. Note that details of the state prediction system 11 will be described below.

The control management system 12 is a system that manages a schedule and a power consumption amount of the electric vehicle 25. For example, the control management system 12 performs predetermined communication with the EV management system 100 and manages the schedule of the electric vehicle 25. In addition, for example, in a case where it is predicted that the future power consumption amount per day of the electric vehicle 25 is relatively large, information is exchanged between a management personal computer 13 and a power transaction applicant personal computer 28 in a predetermined manner via the control management system 12, and power (the power amount to be used in the future) is bought and sold. Power is then supplied in a predetermined manner to the charging facility 24 via the power distribution facility 22 or the like.

The management personal computer 13 is a computer operated by an administrator of the EV management system 100, and exchanges data with the EV management system 100 in a predetermined manner.

The power transaction applicant personal computer 28 is a computer for performing power transactions (purchases and sales) with the management personal computer 13 via the EV management system 100, and is operated by a power transaction applicant. Further, in a case where a power transaction is established between the administrator and the power transaction applicant, power is supplied in a predetermined manner via the power distribution facility 22 or the like, based on the operation of the power transaction applicant personal computer 28. Note that data may be exchanged between the management personal computer 13 and the power transaction applicant personal computer 28 via a power transaction market system (not illustrated).

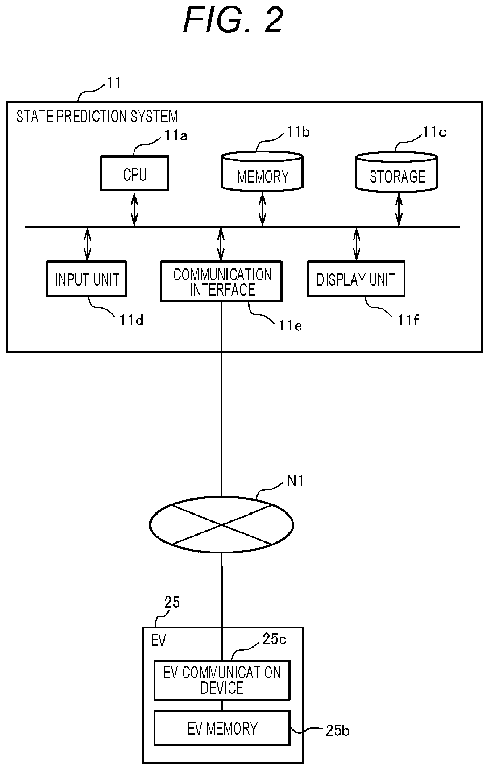

FIG. 2 is a configuration diagram including a hardware configuration of the state prediction system 11.

The function of the state prediction system 11 is realized by an electronic computer (and peripheral devices thereof) such as a general-purpose computer or a server. As illustrated in FIG. 2, the state prediction system 11 includes, as a hardware configuration thereof, a central processing unit (CPU) 11a, a memory 11b, a storage 11c, an input unit 11d, a communication interface 11e, and an output unit 11k.

The CPU 11a executes predetermined arithmetic processing based on programs stored in the memory 11b and the storage 11c. The memory 11b includes a random access memory (RAM) that temporarily stores data. The storage 11c includes a read only memory (ROM) that stores data for a long period of time. As such a storage 11c, for example, a hard disk drive (HDD) or a solid state drive (SSD) is used.

The input unit 11d inputs data through user operations. Other than a keyboard or a mouse, a touch panel or the like may be used as such an input unit 11d. Note that, as the input unit 11d, a keyboard or a mouse of the management personal computer 13 may be used.

The communication interface 11e performs data conversion based on a predetermined protocol when data is exchanged between the state prediction system 11 and the electric vehicle 25 via a communication network N1.

A display unit 11f is, for example, a liquid crystal display, and displays an arithmetic result or the like of the CPU 11a in a predetermined manner. Note that a display of the management personal computer 13 may be used as the display unit 11f. The state prediction system 11 may be constituted by one device (a server or the like), or may be configured such that a plurality of devices (not illustrated) are connected in a predetermined manner, via a communication line or a network.

As illustrated in FIG. 2, the electric vehicle 25 includes an EV memory 25b and an EV communication device 25c. The EV memory 25b stores predetermined data regarding the behavior and the charging rate of the electric vehicle 25. The EV communication device 25c exchanges data with the state prediction system 11 in a predetermined manner via the communication network N1 (a wireless communication network or the charging cable 27 of FIG. 1).

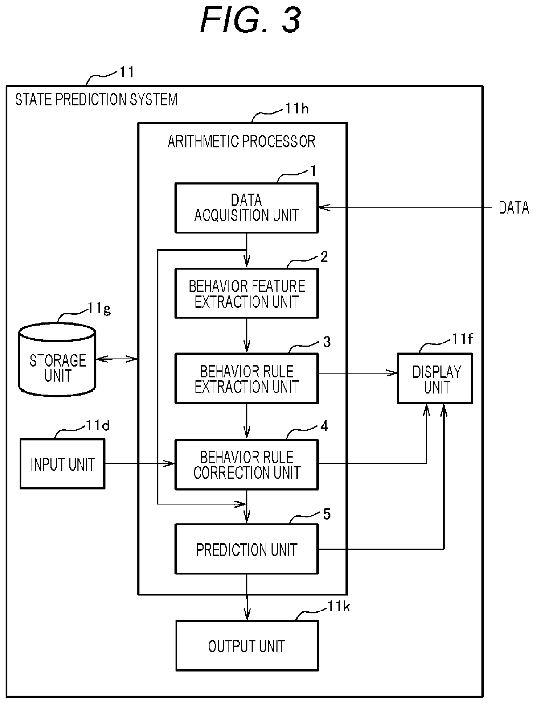

FIG. 3 is a functional block diagram of the state prediction system 11.

As illustrated in FIG. 3, the state prediction system 11 includes, as a functional configuration, a storage unit 11g, an arithmetic processor 11h, an output unit 11k, the input unit 11d, and the display unit 11f. The storage unit 11g stores a predetermined program and data. The arithmetic processor 11h executes predetermined arithmetic processing based on the program and data stored in the storage unit 11g. The output unit 11k outputs an arithmetic result of the arithmetic processor 11h to the control management system 12 or the like (see FIG. 1). Note that the input unit 11d and the display unit 11f are as described with reference to FIG. 2.

As illustrated in FIG. 3, the arithmetic processor 11h includes a data acquisition unit 1, a behavior feature extraction unit 2, a behavior rule extraction unit 3, a behavior rule correction unit 4, and a prediction unit 5. The data acquisition unit 1 acquires predetermined data relating to the electric vehicle 25 (see FIG. 1) through wireless communication, or acquires the predetermined data via the charging cable 27 (see FIG. 1) during charging. The data acquired by the data acquisition unit 1 includes SoC historical data (charging rate historical data) and behavior historical data of the electric vehicle 25.

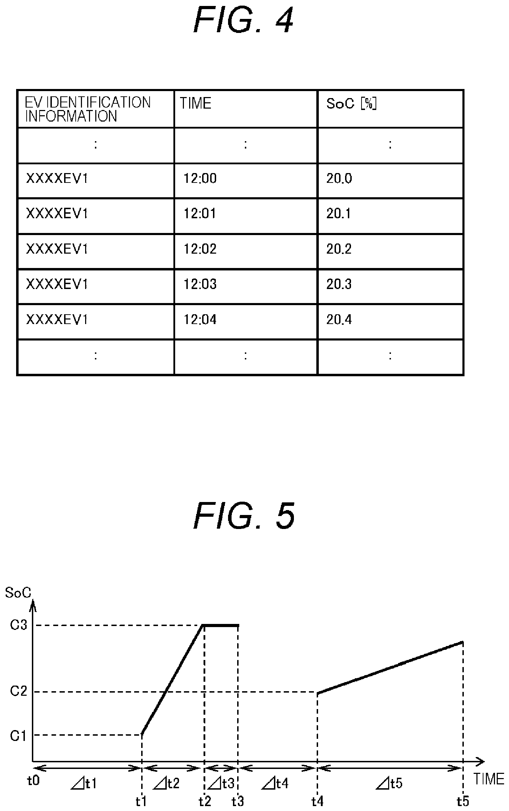

FIG. 4 is an explanatory diagram of SoC historical data of the electric vehicle.

The SoC historical data illustrated in FIG. 4 is data representing the SoC (charging rate) of the electric vehicle 25 (see FIG. 1) on a moment-by-moment basis, and includes "EV identification information", "time", and "SoC". The "EV identification information" is identification information assigned to the electric vehicle 25, and is preset. The "time" is a time at which data such as the SOC is acquired. Note that year, month, and day data may be added to the "time" included in the SoC historical data. "SoC" is the charging rate of the electric vehicle 25 as described above.

The SoC historical data in which the "EV identification information", the "time", and the "SoC" are associated is then acquired from the electric vehicle 25 (see FIG. 1) by the data acquisition unit 1 (see FIG. 3). For example, the SoC historical data is acquired sequentially via the charging cable 27 (see FIG. 1), the charging facility 24 (see FIG. 1), and the communication line (broken line in FIG. 1) during charging of the electric vehicle 25.

FIG. 5 is an explanatory diagram illustrating a temporal change in the SoC of the electric vehicle (see FIGS. 1 and 3 as appropriate).

Note that, in FIG. 5, the horizontal axis represents time, and the vertical axis represents the SoC of the electric vehicle 25 (see FIG. 1). In addition, FIG. 5 illustrates an example in which the SoC historical data and the like are acquired from the electric vehicle 25 via the charging cable 27 while the electric vehicle 25 is being charged (times t1 to t2, times t4 to t5) or on standby (times t2 to t3), and the SoC historical data and the like are not acquired while the electric vehicle 25 is moving (times t0 to t1 and times t3 to t4 in FIG. 5) . Note that the "movement" of the electric vehicle 25 also includes temporary stops on a road.

In the example of FIG. 5, charging of the electric vehicle 25 is performed from the charging facility 24 (see FIG. 1) via the charging cable 27 (see FIG. 1) from times t1 to time t2, and the SoC rises from a value C1 to a value C3 as time elapses. In addition, from times t2 to t3, the electric vehicle 25 is in a standby state while connected to the charging facility 24 via the charging cable 27, and the SoC is maintained at the value C3. Further, after the electric vehicle 25 moves from times t3 to t4, the electric vehicle 25 is charged again from times t4 to t5.

Note that, in the example of FIG. 5, an example is illustrated in which the state prediction system 11 (see FIG. 1) acquires the SoC during charging and standby of the electric vehicle 25 in real time, but the present invention is not limited thereto. For example, when the value of the SoC of the battery 25a (see FIG. 1) is stored in the EV memory 25b (see FIG. 2) of the electric vehicle 25, the past SoC may be acquired by the data acquisition unit 1 (see FIG. 3) during charging of the electric vehicle 25. Further, the value of the SoC of the electric vehicle 25 on a moment-by-moment basis may be directly transmitted from the electric vehicle 25 to the state prediction system 11 by wireless communication between the electric vehicle 25 and the state prediction system 11.

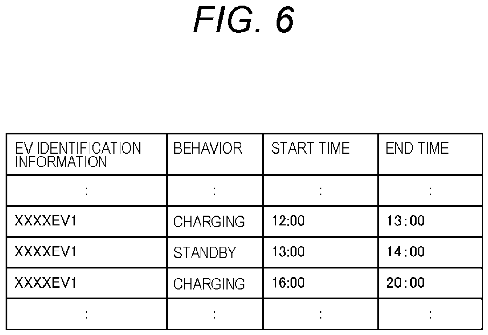

FIG. 6 is an explanatory diagram of behavior historical data of the electric vehicle.

The behavior historical data illustrated in FIG. 6 is data in which "EV identification information" of the electric vehicle 25, the type of "behavior", the "start time" of the behavior, and the "end time" of the behavior are associated with each other. For example, it is assumed that the electric vehicle 25 is charged in the time zone of 12:00 to 13:00. In this case, as illustrated in FIG. 6, predetermined behavior historical data, which indicates that the type of behavior of the electric vehicle 25 is "charging", that the behavior start time is "12:00", and that the behavior end time is "13:00", is generated. The behavior historical data generated in this manner is sequentially transmitted to the state prediction system 11 via the charging facility 24 (see FIG. 1) and the communication line (broken line in FIG. 1).

Note that the charging facility 24 connected to the electric vehicle 25 via the charging cable 27 may generate the behavior historical data. Further, it is not particularly necessary to acquire behavior historical data regarding the "movement" of the electric vehicle 25. This is because, in a time zone in which neither charging nor standby is performed, the electric vehicle 25 may be treated as if moving.

The behavior feature extraction unit 2 illustrated in FIG. 3 extracts features of behaviors of the electric vehicle 25 based on behavior historical data representing a history of behaviors of the electric vehicle 25 (device) and SoC historical data (charging rate historical data) representing an SoC (charging rate) history for the battery 25a of the electric vehicle 25.

Based on the features of the behaviors of the electric vehicle 25 (device), the behavior rule extraction unit 3 extracts predetermined behavior rules indicating charging/discharging timings and charge/discharge amounts as trends in the charging/discharging of the battery 25a accompanying the behaviors of the electric vehicle 25.

The behavior rule correction unit 4 corrects the behavior rules based on a predetermined input operation (a predetermined input operation by the administrator by referring to the display unit 11f).

In a case where a behavior rule is corrected by the behavior rule correction unit 4, the prediction unit 5 predicts a future state of the electric vehicle 25 (device) based on the corrected behavior rule.

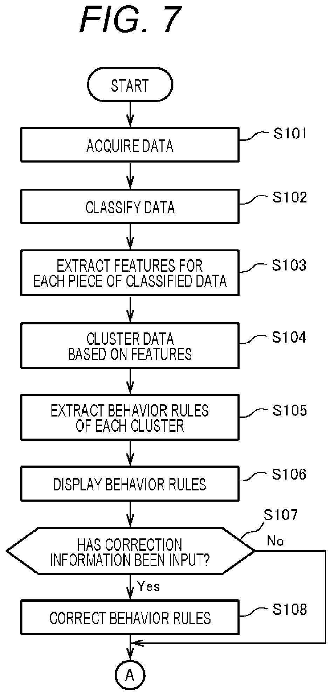

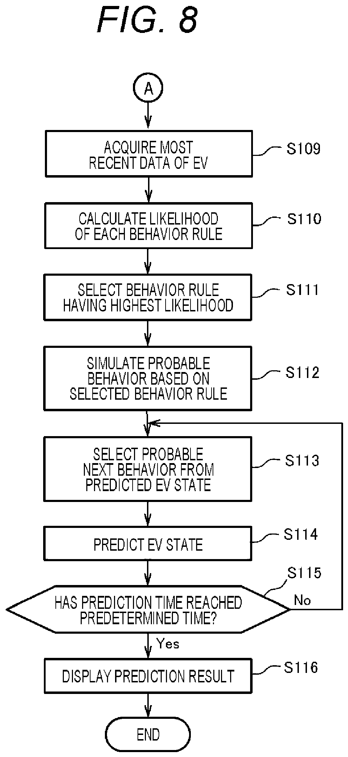

Next, processing performed by the state prediction system 11 will be described with reference to FIGS. 7 and 8.

FIGS. 7 and 8 are flowcharts of processing executed by the state prediction system (see FIG. 3 as appropriate.).

In step S101, the arithmetic processor 11h acquires data of the electric vehicle 25 by using the data acquisition unit 1. That is, the arithmetic processor 11h acquires the SoC historical data (see FIGS. 4 and 5) and the behavior historical data (see FIG. 6) of the electric vehicle 25 via the charging facility 24 (see FIG. 1).

In step S102, the arithmetic processor 11h classifies the data acquired in step S101 by the behavior feature extraction unit 2. That is, based on the behavior historical data of the electric vehicle 25 (see FIG. 6), the arithmetic processor 11h classifies the SoC historical data on a moment-by-moment basis as any of movement, charging, and standby, which are behavior types of the electric vehicle 25.

In the examples of FIGS. 5 and 6, in time zones (times t0 to t1 and times t3 to t4 in FIG. 5) in which the electric vehicle 25 is not connected to the charging facility 24 (see FIG. 1) via the charging cable 27 (see FIG. 1), the SoC historical data is not acquired, and the behavior historical data is also not acquired. The arithmetic processor 11h treats the electric vehicle 25 as if the vehicle is moving in such time zones.

Incidentally, even in a case where the behavior historical data is barely acquired, it is possible to estimate the behavior type of the electric vehicle 25 based on the speed of change (the temporal rate of change) of the SoC included in the SoC historical data. For example, it may be estimated that "charging" is being performed when the rate of change of the SoC is positive, that "standby" is being performed when the rate of change of the SoC is substantially zero, and that "movement" is underway when the rate of change of the SoC is negative (or in time zones in which the SoC historical data is not obtained).

In the example of FIG. 5, the SoC historical data is classified into "movement" at times t0 to t1, "charging" at times t1 to t2, "standby" at times t2 to t3, "movement" at times t3 to t4, and "charging" at times t4 to t5.

Next, in step S103 of FIG. 7, the arithmetic processor 11h extracts a feature for each piece of classified data (SoC historical data) by using the behavior feature extraction unit 2 (behavior feature extraction processing). Note that a "feature" is data representing a feature of a behavior of the electric vehicle 25 (device). Such a "feature" includes information specifying the time and the SoC (charging rate) when the electric vehicle 25 starts a predetermined behavior, and the time and the SoC (charging rate) when the electric vehicle 25 ends the behavior. In the first embodiment, four items are used as the "features", namely, the start time of a behavior of the electric vehicle 25, the SoC at the start of the behavior (referred to as the start SoC), a charge/discharge amount, and the duration of the behavior.

For example, as the feature of the behavior (charging) of the electric vehicle 25 from times t1 to t2 in FIG. 5, the start time of the behavior is t1, the start SoC is C1, the charge amount accompanying the behavior is (C3 - C1), and the duration of the behavior is Δt2.

In addition, for example, as the feature of the behavior (movement) of the electric vehicle 25 from times t3 to t4 in FIG. 5, the start time of the behavior is t3, the start SoC of the behavior is C3, the discharge amount (amount of power consumption) accompanying the behavior is (C3 - C2), and the duration of the behavior is Δt4.

As described above, in a case where there is a time zone in which SoC historical data (charging rate historical data) and behavior historical data have not been acquired, the behavior feature extraction unit 2 sets the type of the behavior of the electric vehicle 25 (mobile body) in this time zone as "movement", and also sets the start time of this time zone the start time of the "movement". Furthermore, the behavior feature extraction unit 2 extracts a feature by setting the SoC (charging rate) acquired immediately before the start of this time zone as the charging rate at the start of the "movement", setting the end time of this time zone as the end time of the "movement", and setting the SoC (charging rate) acquired immediately after the end of this time zone as the charging rate at the end of the movement. As a result, the behavior feature extraction unit 2 is capable of extracting the feature of the behavior of the electric vehicle 25 even in a time zone in which the SoC historical data and the behavior historical data are not acquired.

Note that, even if the types of behavior performed in different time zones are the same, when another type of behavior is interposed between the behaviors, the behaviors are treated as different behaviors. For example, although the behavior type is common to the "charging" at the times t1 to t2 and to the "charging" at the times t4 to t5 in FIG. 5, another behavior type ("standby" from the times t2 to t3 and "movement" from the times t3 to t4) is interposed therebetween at the times t2 to t4. In such a case, the behavior feature extraction unit 2 extracts a feature relating to the "charging" from the times t1 to t2, and separately extracts a feature relating to the "charging" from the times t4 to t5.

Furthermore, even if the dates (year/month/day) on which the SoC historical data and the behavior historical data are acquired are different, the data of the respective dates is commonly treated as data which is included in any time zone of the 24 hours in one day.

In addition, data may also be analyzed that includes the SoC historical data and behavior historical data of a plurality of electric vehicles 25 (see FIG. 1) which are managed using similar operations. As a result, sufficient SoC historical data and behavior historical data are obtained, and therefore the accuracy when predicting the behavior of the electric vehicle 25 can be improved.

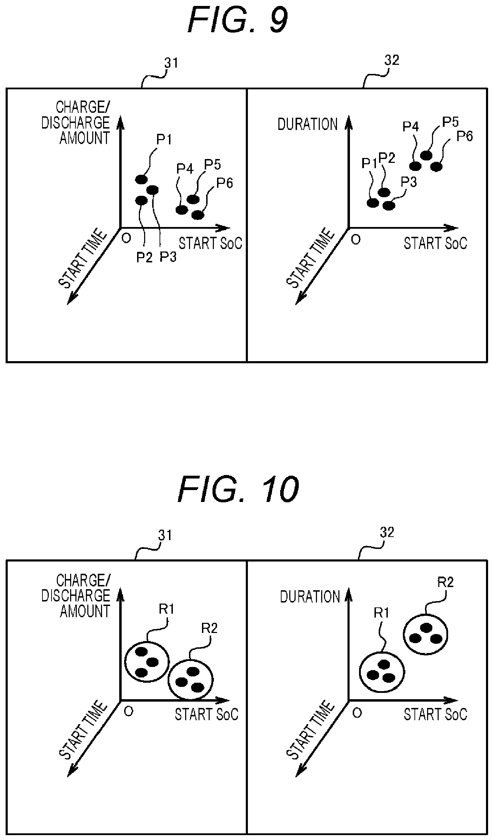

FIG. 9 is an explanatory diagram in a case where four types of features of electric vehicle behavior are plotted.

Note that FIG. 9 illustrates an example in which data of the four features, namely, the start time of the behavior, the start SoC, the charge/discharge amount, and the duration, is plotted. However, because the data is four-dimensional data, the data is divided into two in FIG. 9. To explain the foregoing in specific terms, three-dimensional axes of the start time, the start SoC, and the charge amount of the behavior are illustrated on the left side (reference sign 31) of the drawing of FIG. 4, and three-dimensional axes of the start time, the start SoC, and the duration of the behavior are illustrated on the right side (reference sign 32) of the drawing of FIG. 4. Note that the two axes of the behavior start time and the start SoC are common on both the left side and the right side of the drawing of FIG. 4. In addition, the positive side of the axis of the charge/discharge amount denotes charging, and the negative side denotes discharging.

For example, the four features (the start time, start SoC, charge/discharge amount, and duration of the behavior) of the "charging" at the times t1 to t2 in FIG. 5 are plotted as a point P1 in FIG. 9. In addition, the four features of the "charging" at the times t3 to t4 in FIG. 5 are plotted as a point P4 in FIG. 9. Note that the remaining points P2, P3, P5, and P6 in FIG. 7 are features of behaviors on other dates (or of other vehicles). In addition, although not illustrated in FIG. 5, features of behaviors such as "standby" and "movement" are also extracted.

Incidentally, for the start time of the behavior, for example, the value of the start time at 0:00 may be set to zero, and the value may increase by one every time one minute elapses. In this case, the behavior start time is associated with any of 0 to (60 minutes × 24 hours) discrete numerical values. Further, the behavior feature extraction unit 2 may perform so-called normalization processing and divide each feature by a predetermined representative value to render the feature dimensionless. Such normalized data is also included in the "features".

Next, in step S104 of FIG. 7, the arithmetic processor 11h causes the behavior rule extraction unit 3 to perform clustering based on the features of the behavior.

FIG. 10 is an explanatory diagram of a result of clustering data of features of electric vehicle behavior. Note that the pieces of data plotted in FIG. 10 are the same as those illustrated in FIG. 9.

As a clustering method in step S104 (see FIG. 7), for example, k-means clustering, which is one example of non-hierarchical clustering, is used. Describing k-means clustering, the behavior rule extraction unit 3 first randomly assigns clusters to each piece of feature data, and calculates coordinate values (values of four-dimensional coordinates) for the center of each cluster. Note that, as the center of the cluster, for example, an average value (each average value in the four-dimensional coordinates) of a plurality of pieces of data belonging to the cluster may be used.

Next, the behavior rule extraction unit 3 calculates the distance between the points of the predetermined data and the center of each cluster, and re-assigns the clusters such that the predetermined data belongs to the cluster for which this distance is the smallest. The behavior rule extraction unit 3 executes such processing for all the data of the feature. Further, in a case where the cluster assignment has not changed, the behavior rule extraction unit 3 ends the cluster assignment, and in other cases, performs the calculation again, based on newly assigned clusters. In the example of FIG. 10, two clusters R1 and R2 are generated. Note that the k-means clustering described above is an example, and the clustering method is not limited thereto.

Next, in step S105 of FIG. 7, the arithmetic processor 11h causes the behavior rule extraction unit 3 to extract behavior rules for each cluster (behavior rule extraction processing). That is, the behavior rule extraction unit 3 classifies, based on predetermined clustering, information including features of a plurality of types (four types in FIG. 10) and extracts the classification results as the behavior rules. Here, the "behavior rules" are data representing charging/discharging timings and charge/discharge amounts as trends for the charging/discharging of the battery 25a that accompany the behaviors of the electric vehicle 25.

Such behavior rules have one-to-one correspondence with each of the clusters R1, R2, and so forth (see FIG. 10). To be clear, the behavior rules are a collection of data on past similar behaviors (driver judgment-based behavior) of the electric vehicle 25, based on four viewpoints, namely, the start time, start SoC, charge/discharge amount, and duration of the behavior. The behavior rules include statistical data (the average value, variance, maximum value, minimum value, and the like, of each component) of the clusters R1, R2, and so forth in addition to the behavior type (any of movement, charging, and standby) and identification information for specifying the clusters R1, R2, and so forth.

In addition, the behavior rule extraction unit 3 may perform probability modeling of the data included in each of the clusters R1, R2, and so forth, based on an assumption that the data has a normal distribution. Here, "probability modeling" is processing in which a predetermined numerical formula is used to represent a distribution of data belonging to a cluster, based on a probability density function. For example, assuming that data has a normal distribution, a respective average value and a respective variance of the four-dimensional data components (that is, features of four types) belonging to a cluster are parameters that provide a probability density function. Such parameters are used in processing by the prediction unit 5 (see FIG. 3) to be described below.

After extracting the behavior rules in step S105 of FIG. 7, the display unit 11f (see FIG. 3) displays the behavior rules in step S106 (display processing).

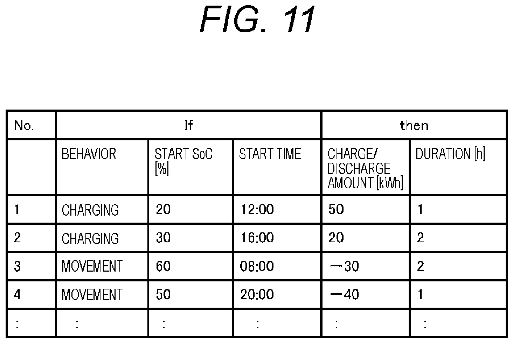

FIG. 11 is a display example of behavior rules of an electric vehicle.

In the example of FIG. 11, in addition to the identification information (No. 1, No. 2,...) of the behavior rules (cluster), the type of behavior, the start SoC of the behavior, the start time, the charge/discharge amount, and the duration of the behavior are displayed in a table format. Note that, in FIG. 11, a positive value is displayed as the charge/discharge amount in the case of charging the electric vehicle 25, and a negative value is displayed as the charge/discharge amount in the case of discharging.

For example, in the case of No. 1 in FIG. 9, an average value of each of the four components (start SoC, start time, charge/discharge amount, and duration) of a predetermined cluster (for example, cluster R1 in FIG. 10) corresponding to this behavior rule is displayed. Note that the same applies to behavior rules No. 2, No. 3, No. 4,... in FIG. 9. As described above, the display unit 11f (see FIG. 3) displays data including the average values of each of the plurality of types of features in the clustering-based classification results, in association with the types of behavior (charging, standby, and movement) of the electric vehicle 25 (device). As a result, the administrator of the EV management system 100 (see FIG. 1) is able to easily ascertain the behavior rules (behavioral trend) of the electric vehicle 25.

In addition, in FIG. 9, information specified at the start of a behavior is indicated by "if". Such information includes the type of behavior of the electric vehicle 25, the start SoC, and the start time. On the other hand, in FIG. 9, information specified at the end of the behavior (that is, when shifting to the next behavior) is indicated by "then". Such information includes the charge/discharge amount of the electric vehicle 25 and the duration of the behavior.

For example, in a case where the start SoC of charging is about 20 [%] and the start time of the charging is around 12:00 ("if" in FIG. 11), there is a high possibility that the behavioral trend of the electric vehicle 25 corresponds to behavior rule "No. 1". Furthermore, as a result of the charging described above, the charge amount is 50 [kWh], and there is a high possibility that the charging duration will be one hour ("then" in FIG. 11). As described above, one of the main features of the first embodiment is that information including a condition ("if") and a result ("then"), which is given when predicting the future state of the electric vehicle 25, is classified as a cluster R1, R2, and so forth (see FIG. 10).

Note that the processing by the behavior feature extraction unit 2 (see FIG. 3) and by the behavior rule extraction unit 3 (see FIG. 3) is repeated in a predetermined manner. For example, behavior rules or the like may be updated once a day based on data of the electric vehicle 25 up to the most recent time.

In step S107 of FIG. 7, the arithmetic processor 11h determines whether or not correction information has been input. That is, the arithmetic processor 11h determines whether or not predetermined correction information for correcting the behavior rules has been input by means of a user operation via the input unit 11d.

For example, in a case where the electric vehicle 25 is used for delivery of a product, a daily schedule (a delivery start time, end time, and the like) may be changed. In addition, the upper limit value and the lower limit value of the SoC of the electric vehicle 25 may be changed. Additionally, behavior types of the electric vehicle 25 may be newly added to accompany a change in operation, for example.

In such a case, if the behavior rules before the change (that is, a plurality of clusters) are used when predicting the behavior of the electric vehicle 25 after the operation has changed, there is a possibility of a large deviation arising between the prediction result and the actual state. In addition, the SoC historical data and the behavior historical data of the electric vehicle 25 are barely accumulated immediately after a change in operation. Therefore, in the first embodiment, in a case where the operation of the electric vehicle 25 changes, the behavior rules (behavioral trend) of the electric vehicle 25 are corrected by means of a user operation via the input unit 11d.

In a case where correction information is input in step S107 of FIG. 7 (S107: Yes), the arithmetic processor 11h corrects the behavior rules of the electric vehicle 25 by using the behavior rule correction unit 4 in step S108 (behavior rule correction processing). That is, the behavior rule correction unit 4 corrects the behavior rules based on a predetermined input operation (a predetermined input operation by the administrator via the input unit 11d) by referring to the display unit 11f that displays the behavior rules. For example, where behavior rule No. 1 in FIG. 11 is concerned, in a case where the charging start time changes together with a change in operation, the user changes the movement start time of No. 1 in a predetermined manner.

As described above, the correction of the behavior rules by the behavior rule correction unit 4 includes processing (for example, processing to shift the start time of a behavior) to shift the (center) position of a predetermined cluster which is selected by a user operation (input operation) via the input unit 11d, from among the plurality of clusters R1, R2, and so forth (see FIG. 10) generated based on clustering. As a result, the future state of the electric vehicle 25 can be appropriately predicted by the prediction unit 5, which will be described below, even immediately after the operation has changed.

Furthermore, for example, a new cluster may be added based on a user operation via the input unit 11d. That is, the correction of the behavior rules by the behavior rule correction unit 4 includes processing to add a new cluster by means of an operation (input operation) by the user via the input unit 11d, in addition to a plurality of clusters generated based on the clustering. As a result, the future state of the electric vehicle 25 can be appropriately predicted even in a case where it is predicted that the behavior of the electric vehicle 25 will change significantly after an operation change or in a case where it is predicted that a type of behavior that did not exist before the operation change will be performed.

As described above, one of the main features of the first embodiment is that the behavior rule can be corrected by a user operation via the input unit 11d.

Note that, when a new cluster is added, in addition to the type of behavior of the electric vehicle 25 and the start time of the behavior, the average value and variance of each of the start SoC, the charge/discharge amount, and the duration are set in a predetermined manner by a user operation via the input unit 11d (see FIG. 3). In this manner, the changed (or added) behavior rules are displayed on the display unit 11f (see FIG. 3) in a predetermined manner.

On the other hand, in a case where there is no input of correction information in step S107 of FIG. 7 (S107: No), the processing by the arithmetic processor 11h advances to step S109 in FIG. 8. In this case, the data of the behavior rules extracted by the behavior rule extraction unit 3 is output to the prediction unit 5 without further processing.

In step S109 of FIG. 8, the arithmetic processor 11h uses the data acquisition unit 1 (see FIG. 3) to acquire the most recent data of the electric vehicle 25. That is, the arithmetic processor 11h acquires the most recent (for example, current) SoC historical data and behavior historical data of the electric vehicle 25.

In step S110, the arithmetic processor 11h calculates the likelihood of each behavior rule by using the prediction unit 5. As a specific example, the prediction unit 5 calculates the likelihood of each behavior rule in a case where the start SoC of the behavior is known, and calculates the likelihood of each behavior rule in a case where the start time of the behavior is known, based on a likelihood function f below (Formula 1). Note that (Formula 1) uses a probability density function of a normal distribution as the likelihood function f.

[Formula 1]

$$f(X : \mu, \ \sigma^2) \ = \frac{1}{\sqrt{2\pi\sigma^2}} \exp\left(-\frac{(X-\mu)^2}{2\sigma^2}\right)$$

... Formula 1

For example, in calculating the likelihood of a behavior rule in a case where the start time of the behavior is known, X in (Formula 1) denotes the most recent behavior start time, $\mu$ denotes the average value of the behavior start times of a predetermined behavior rule (cluster), and $\sigma^2$ denotes the variance in the behavior start times of the predetermined behavior rule (cluster). The average value $\mu$ and the variance $\sigma^2$ are calculated in step S105 (see FIG. 7) for each of the clusters R1, R2, and so forth (see FIG. 10). Similarly, the prediction unit 5 also calculates, based on (Formula 1), the likelihood in a case where the start SoC of the behavior is known.

Note that, in a case where correction information has been input in step S107 (S107: Yes), the behavior rule after the correction is used.

Further, the prediction unit 5 calculates a new likelihood by multiplying the likelihood pertaining to the behavior start SoC by the likelihood pertaining to the start time. This serves to compare the magnitudes of the likelihoods of the respective behavior rules in the processing of the next step 5111. The prediction unit 5 calculates such a likelihood for each behavior rule (that is, cluster).

Next, in step S111, the arithmetic processor 11h uses the prediction unit 5 to select the behavior rule having the highest likelihood. That is, the prediction unit 5 calculates the likelihood of each behavior rule based on the most recent SoC historical data (charging rate historical data) and behavior historical data of the electric vehicle 25 (device), and selects (specifies) the behavior rule having the highest likelihood as the most recent behavior rule of the electric vehicle 25. The "likelihood" is calculated, for example, by multiplying the likelihood based on the behavior start time by the likelihood based on the start SoC.

Note that it is also possible to specify the type of the most recent behavior (for example, charging) of the electric vehicle 25 based on the data acquired by the data acquisition unit 1. Therefore, the prediction unit 5 preferably selects the behavior rule having the highest likelihood from among the plurality of behavior rules belonging to the behavior. That is, the prediction unit 5 specifies the type of the most recent behavior of the electric vehicle 25 based on the most recent SoC historical data (charging rate historical data) and the behavior historical data of the electric vehicle 25 (device), and specifies, as the most recent behavior rule of the electric vehicle 25, the behavior rule having the highest likelihood among the plurality of behavior rules associated with the specified type of behavior. As a result, the prediction unit 5 is capable of selecting the most appropriate behavior rule from among the types of behavior which are actually performed by the electric vehicle 25.

Next, in step S112, the arithmetic processor 11h uses the prediction unit 5 to simulate the stochastic behavior of the electric vehicle 25, based on the selected behavior rule. For example, assuming that the charge/discharge amount and the duration of the behavior included in the behavior rule selected in step Sill each follow a predetermined normal distribution, the prediction unit 5 generates, one by one, a random number for the charge/discharge amount and a random number for the duration, based on the normal distribution. Note that, regarding the charge/discharge amount and the duration of the behavior, the average value and the variance, which are normal distribution parameters thereof, are calculated at the time the behavior rules are extracted (S105 in FIG. 7).

The prediction unit 5 repeats processing in which random numbers for the charge/discharge amount and for the duration of the behavior are calculated and the calculation results are sequentially integrated (that is, the sum is obtained). The prediction unit 5 then repeats the processing to integrate the charge/discharge amounts until the integrated value of the random number for the duration reaches the time from the start time of the most recent behavior rule to the current time, and stores the charging rate, on a moment-by-moment basis, in the storage unit 11g. As a result, a temporal change (change up to the present) in the charging rate of the most recent behavior rule is ascertained.

Further, the prediction unit 5 specifies a time at which the SoC of the electric vehicle 25 will reach a predetermined upper limit value or lower limit value on the assumption that the temporal change in the charge/discharge amount, for the most recent behavior rule, continues. In this manner, the duration of the behavior rule is estimated stochastically. Note that the upper limit value and the lower limit value of the SoC are preset.

In step S113, the arithmetic processor 11h uses the prediction unit 5 to select a probable next behavior based on the predicted state of the electric vehicle 25. As described above, the charge/discharge amount and the duration of the most recent behavior rule are calculated based on the result of stochastically simulating the behavior of the electric vehicle 25 (S113). As a result, the SoC and end time when the most recent behavior rule ended are also specified. The SoC when the most recent behavior rule ended is used as the start SoC of the next behavior rule. The end time of the most recent behavior rule is used as the start time of the next behavior rule.

Note that the processing content of step S113 is similar to that of steps S110 and Sill. That is, the prediction unit 5 selects, as the probable next behavior, the behavior rule for which the value, obtained by multiplying the likelihood pertaining to the start SoC of the behavior by the likelihood pertaining to the start time, is the highest.

Next, in step S114, the arithmetic processor 11h uses the prediction unit 5 to predict the state of the electric vehicle 25. Note that the processing content of step S114 is similar to that of step S112, but is different in that the prediction does not need to be repeated because there is no particular data for the time from the start time of the behavior rule to the current time.

Specifically, in step S114, assuming that the charge/discharge amount and the duration of the behavior included in the next behavior rule selected in step S113 each follow a predetermined normal distribution, the prediction unit 5 generates, one by one, a random number for the charge/discharge amount and a random number of the duration, based on the normal distribution. The random numbers for the charge/discharge amount and the duration are used as the charge/discharge amount and the duration of the next behavior rule selected in step S113. As a result, the SoC and end time when this behavior rule ended are also estimated. In this manner, the prediction unit 5 repeats processing to estimate another behavior rule to be adopted by the electric vehicle 25 (device) after that behavior rule, based on the time and the SoC (charging rate) when the behavior rule ended.

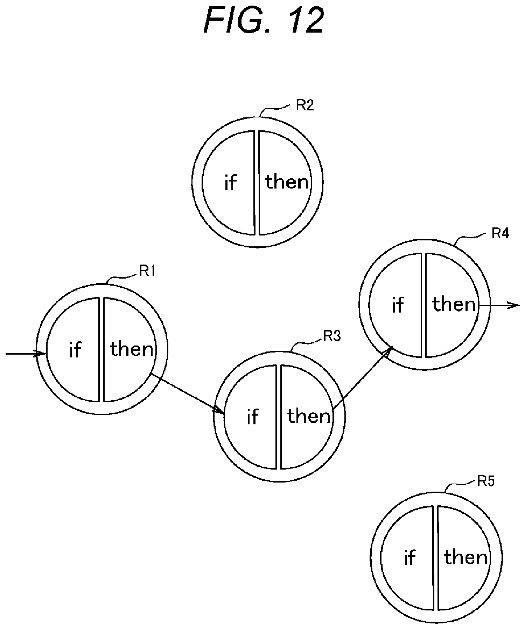

FIG. 12 is a conceptual diagram of processing by the prediction unit in the state prediction system.

Note that "if" illustrated in FIG. 12 corresponds to "if" in FIG. 11, and conceptually illustrates information including a type of behavior, a start SoC, and a start time, of a predetermined behavior rule. In addition, "then" illustrated in FIG. 12 conceptually indicates information including a charge/discharge amount and a duration of a behavior of a predetermined behavior rule. In the example of FIG. 12, as the prediction of the future state of the electric vehicle 25, it is predicted that the behavior rule will transition to clusters R1, R3, and R4 in that order.

Next, in step S115 of FIG. 8, the arithmetic processor 11h determines whether or not the prediction time has reached a predetermined time. That is, the arithmetic processor 11h determines whether or not the end time (prediction time) of the behavior rule selected in step S113 has reached a predetermined time. The predetermined time is, for example, the end time of the daily schedule (for example, 24:00), and is preset.

When the prediction time has not reached the predetermined time in step S115 (S115: No), the processing by the arithmetic processor 11h returns to step S113. The arithmetic processor 11h then repeats the processing of steps S113 and S114 until the prediction time reaches the predetermined time. Note that the "prediction processing" to predict the future state of the electric vehicle 25 (device) includes the processing of steps S109 to S115. In addition, in a case where the prediction time has reached the predetermined time in step S115 (S115: Yes), the processing by the arithmetic processor 11h advances to step S116.

In step S116, the arithmetic processor 11h causes the display unit 11f (see FIG. 3) to display the prediction result. For example, as the future behavior rule of the electric vehicle 25, in addition to the start time and the start SoC, data including the charge amount and the duration is displayed on the display unit 11f in association with the behavior type. As a result, the user (administrator) is able to ascertain a change in the SoC of the electric vehicle 25 and a prediction result regarding the type of behavior at that time. Note that, although not illustrated in FIG. 8, the prediction result of the arithmetic processor 11h is also output to the control management system 12 and is used in a predetermined manner for power transactions and the like. After performing the processing of step S116, the arithmetic processor 11h ends the series of processing (END).

Note that, in a case where information indicating the date and time (the year, month, day, and time) at which the behavior rule correction is reflected in the processing by the prediction unit 5 is input by means of a predetermined input operation, the prediction unit 5 preferably predicts the future state of the electric vehicle 25 (device), based on the behavior rule before the correction, until the date and time are reached. This is because the operation before the change is applied until this date and time. On the other hand, after this date and time, the prediction unit 5 preferably predicts the future state of the electric vehicle 25 (device) based on the corrected behavior rule. This is because the operation after the change is applied after this date and time.

<Advantageous Effects>

According to the first embodiment, in a case where the behavior rule is corrected through a user operation via the input unit 11d (S107 in FIG. 7: Yes), the prediction unit 5 predicts the future state of the electric vehicle 25 based on the corrected behavior rule (S108 in FIG. 7 and S109 to S115 in FIG. 8). As a result, even in a situation where there is almost no SoC historical data or the like immediately after the operation of the electric vehicle 25 has changed, the state of the electric vehicle 25 can be appropriately predicted by the prediction unit 5.

Further, even if the user does not input the operation schedule or the like of the electric vehicle 25, the user is able to appropriately predict the future state of the electric vehicle 25 (the state after the change in the behavior rule) by appropriately correcting the behavior rule. That is, it is possible to predict the charge amount and the timing at which the electric vehicle 25 stops by the charging facility 24 (see FIG. 1). Therefore, the distributed energy supply and demand system 200 (see FIG. 1) can be used to predict the supply and demand of electric power, and furthermore, make a contribution to society.

<<Second Embodiment>>

The second embodiment differs from the first embodiment in that a behavior rule correction unit 4 (see FIG. 3) assigns a predetermined probability to a behavior rule based on an operation by a user via an input unit 11d (see FIG. 3). Note that otherwise (see the configuration of the state prediction system 11, and so forth: FIG. 3), the second embodiment is similar to the first embodiment. Therefore, sections which are different from those of the first embodiment will be described, whereas descriptions of duplicate sections will be omitted.

The behavior rule correction unit 4 included in the state prediction system 11 (see FIG. 3) has the following functions in addition to the functions described in the first embodiment. That is, the behavior rule correction unit 4 sets a probability that a predetermined behavior rule will be selected in the electric vehicle 25 (device) in association with the behavior rule by an operation (input operation) via the input unit 11d. Specifically, among the plurality of behavior rules extracted by the behavior rule extraction unit 3, a predetermined behavior rule is selected by an operation by the user via the input unit 11d, and a predetermined probability is given to the selected behavior rule.

This probability is appropriately set based on the experience and knowledge of the user in addition to the operation of the electric vehicle 25. The probability that is set by the behavior rule correction unit 4 (see FIG. 3) is output to the prediction unit 5 (see FIG. 3) and also output to the display unit 11f (see FIG. 3). In the display unit 11f, for example, in addition to the start time of the behavior, the start SoC, the charge/discharge amount, and the duration of the behavior, the probability described above is displayed in a predetermined manner in association with the behavior type. Note that probabilities may be set for all behavior rules, or probabilities may be set for some behavior rules, while probabilities may remain unset for the rest.

The flow of processing in the state prediction system 11 is similar to that of the first embodiment (see FIGS. 7 and 8), but is different in that the probability of the behavior rule is added to the correction information in step S107 (see FIG. 7). This probability is multiplied as a weighting for the likelihood of the behavior rule calculated in steps S110, 113 (see FIG. 8). More specifically, the prediction unit 5 calculates a value obtained by multiplying the probability corresponding to the predetermined behavior rule by the likelihood, specifies the behavior rule for which the value is the highest, and then repeats the processing to estimate another behavior rule to be adopted by the electric vehicle 25 (device) after that behavior rule.

As a result, when the state of the electric vehicle 25 is predicted, the higher the probability assigned through a user operation, the more easily the behavior rule is selected. For example, in a case in which there is a high possibility that a specific behavior rule will be adopted together with a change in the operation of the electric vehicle 25, and in which a relatively high probability is set for a behavior rule, prediction reflecting the probability is performed immediately after the operation has changed. As a result, even in a case where the operation has changed, the state of the electric vehicle 25 can be appropriately predicted by the prediction unit 5.

<Advantageous Effects>

According to the second embodiment, the behavior rule correction unit 4 sets a probability for a predetermined behavior rule by means of a user operation via the input unit 11d. As a result, the behavior rule of the electric vehicle 25 can be appropriately predicted even immediately after the operation has changed.

<<Third Embodiment>>

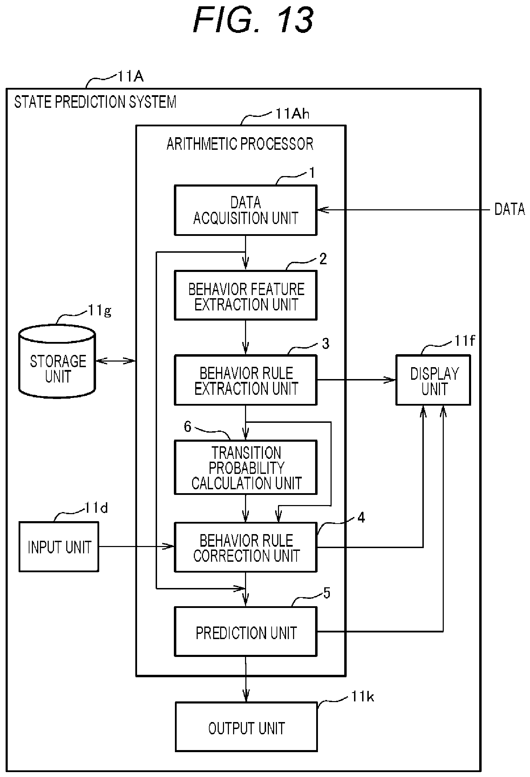

A third embodiment differs from the first embodiment in that a state prediction system 11A (see FIG. 13) includes a transition probability calculation unit 6 (see FIG. 13) that calculates a transition probability when an electric vehicle 25 moves from a predetermined behavior to another behavior. Note that the third embodiment is otherwise the same as the first embodiment. Therefore, sections which are different from those of the first embodiment will be described, whereas descriptions of duplicate sections will be omitted.

FIG. 13 is a functional block diagram of a state prediction system 11A according to the third embodiment.

As illustrated in FIG. 13, an arithmetic processor 11Ah of the state prediction system 11A includes a transition probability calculation unit 6 in addition to the data acquisition unit 1, the behavior feature extraction unit 2, the behavior rule extraction unit 3, the behavior rule correction unit 4, and the prediction unit 5. The transition probability calculation unit 6 calculates the transition probability between behaviors of the electric vehicle 25 (device). Here, a "transition probability" is the probability at the time of shifting from a predetermined behavior to another behavior. In the electric vehicle 25, there is often a pattern in which, due to a driver operation, a specific behavior is to be performed after a certain behavior. For example, the behavior of the electric vehicle 25 after being charged is often movement (travel). By using the transition probability between such behavior types, the accuracy of predicting the state of the electric vehicle 25 is improved.

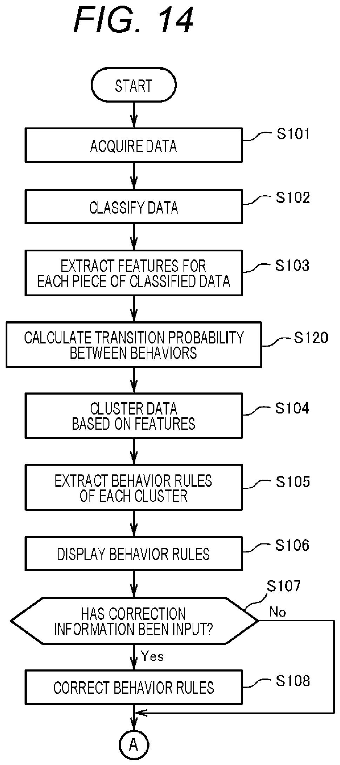

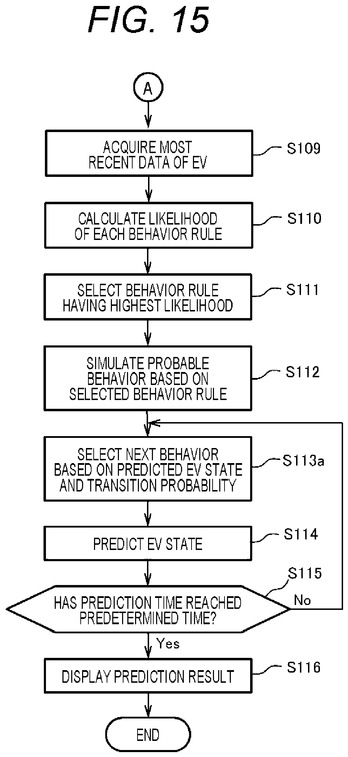

FIGS. 14 and 15 are flowcharts of processing executed by the state prediction system (see FIG. 13 as appropriate.).

Note that the processing in steps S101 to S103 and S104 to S108 in FIG. 14 and in steps S109 to S112 and S114 to S116 in FIG. 15 is similar to that described in the first embodiment (see FIGS. 7 and 8), and thus a description thereof will be omitted. After the features of each of the pieces of classified data are extracted in step S103 of FIG. 14, the processing by the arithmetic processor 11Ah (see FIG. 13) advances to step S120.

In step S120, the arithmetic processor 11Ah uses the transition probability calculation unit 6 to calculate a transition probability between behaviors. Note that, based on the SoC historical data and the behavior historical data acquired by the data acquisition unit 1, information indicating what type of behavior was performed after a certain behavior (for example, charging) is stored in the storage unit 11g. This information is generated based on the SoC historical data and the behavior historical data.

In step S120 described above, the transition probability calculation unit 6 calculates a transition probability at the time of shifting from a predetermined behavior to another type of behavior based on the SoC historical data (charging rate historical data) and the behavior historical data. That is, in addition to the transition probability from "charging" to "movement" and the transition probability from "charging" to "standby", the transition probability calculation unit 6 calculates transition probabilities from "movement" to "charging", from "movement" to "standby", from "standby" to "charging", and from "standby" to "movement", respectively. The transition probability between the behaviors thus calculated is stored in the storage unit 11g in association with the pair of behavior types.

After the processing of step S120 is performed, the processing by the arithmetic processor 11Ah advances to step S104. Note that FIG. 13 illustrates an example in which the transition probability between behaviors is calculated in step S120 after the features are extracted in step S103, but the present invention is not limited thereto. For example, the processing to calculate the transition probability between behaviors may be performed after classifying the data (S102) or after extracting the behavior rules (S105).

In addition, after simulating the probabilistic behavior of the electric vehicle 25 in step S112 of FIG. 15, the processing by the arithmetic processor 11Ah advances to step S113a. In step 113a, the arithmetic processor 11Ah selects the probable next behavior based on the predicted state of the electric vehicle 25 and the transition probability. First, the arithmetic processor 11Ah calculates the likelihood of each behavior rule based on the start time of the behavior of the electric vehicle 25 and the start SoC.

The arithmetic processor 11Ah then calculates a value obtained by multiplying the transition probability when the electric vehicle 25 moves from the predetermined behavior to the next behavior, by the likelihood as the weighting. After selecting the behavior rule for which this value is the highest, the arithmetic processor 11Ah sequentially performs the processing of steps S114 and S115. In this manner, the prediction unit 5 of the arithmetic processor 11Ah calculates a value obtained by multiplying the transition probability corresponding to the predetermined behavior rule by the likelihood, specifies the behavior rule for which the value is the highest, and then repeats the processing to estimate another behavior rule to be adopted by the electric vehicle 25 (device) after that behavior rule.

Note that, when the display unit 11f displays the prediction result in step S116, the transition probability between behaviors used for the prediction is also displayed. Furthermore, a transition probability can also be suitably corrected by the behavior rule correction unit 4, based on an operation by the user via the input unit 11d.

<Advantageous Effects>

According to the third embodiment, the prediction unit 5 predicts the next behavior of the electric vehicle 25 based on the transition probability between behaviors of the electric vehicle 25. As a result, the accuracy in predicting the future state of the electric vehicle 25 can be improved.

<<Fourth Embodiments>>

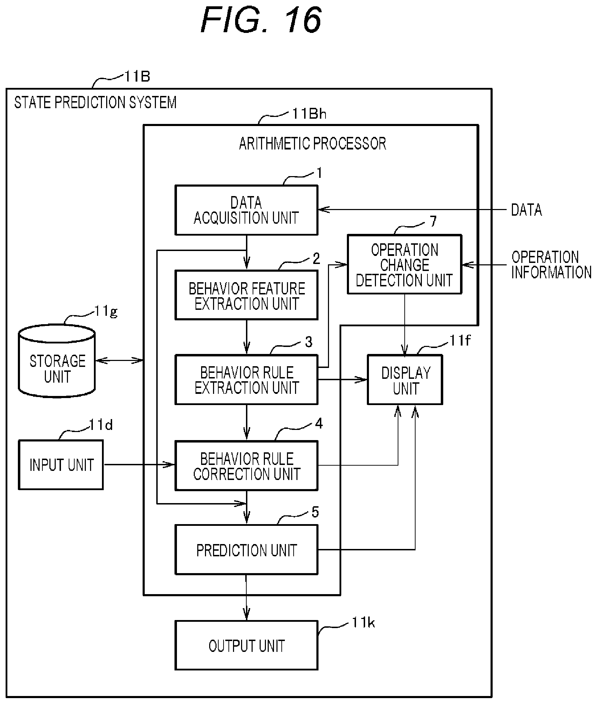

The fourth embodiment differs from the first embodiment in that, in a case where the operation of the electric vehicle 25 has changed, a state prediction system 1111B (see FIG. 16) is provided with an operation change detection unit 7 (see FIG. 16) that outputs the behavior rule to be corrected to the display unit 11f (see FIG. 16). Note that the third embodiment is otherwise the same as the first embodiment. Therefore, sections which are different from those of the first embodiment will be described, whereas descriptions of duplicate sections will be omitted.

FIG. 16 is a functional block diagram of a state prediction system 11B according to a fourth embodiment.

As illustrated in FIG. 16, an arithmetic processor 11Bh of the state prediction system 11B includes an operation change detection unit 7 in addition to the data acquisition unit 1, the behavior feature extraction unit 2, the behavior rule extraction unit 3, the behavior rule correction unit 4, and the prediction unit 5.

The operation change detection unit 7 acquires operation information regarding operation of the electric vehicle 25 (device), and, in a case where a change in the operation is detected, specifies a behavior rule corresponding to the change in operation from among the plurality of behavior rules. The foregoing change in operation is, for example, a change in the start time and the end time of the hours of operation of a business that operates the electric vehicle 25, or a change in the upper limit and the lower limit of the SoC. For example, in a case where the start time of the attached business is changed, the operation change detection unit 7 causes the display unit 11f to display information specifying a behavior rule corresponding thereto and information indicating which feature among the behavior rules should be corrected.

Here, the display unit 11f generates a display so as to distinguish the behavior rule specified by the operation change detection unit 7 from other behavior rules. For example, the display unit 11f displays the behavior rule to be corrected in a color different from other behavior rules so that the user can visually recognize the behavior rule. As a result, in a case where the operation of the electric vehicle 25 has changed, the user is able to ascertain at a glance which behavior rule should be corrected. Furthermore, the display unit 11f may display the features in a predetermined manner using color coding so that the features to be corrected in the behavior rule stand out.

In addition, to accompany the change in operation, the operation change detection unit 7 may cause the display unit 11f to display candidates for an amount of change (an amount of correction) at the time of correction of a predetermined feature included in the behavior rule. As a result, the burden on the user upon correcting the behavior rule is reduced.

In addition, in a case where a feature for which a change amount accompanying the change in operation is equal to or greater than a predetermined threshold value is present in the behavior rule corresponding to the change in operation, the display unit 11f preferably generates a display so as to distinguish the behavior rule specified by the operation change detection unit 7 from other behavior rules.

On the other hand, in a case where a feature for which the change amount accompanying the change in operation is equal to or greater than the predetermined threshold value is not present, it is not particularly necessary for the display unit 11f to display the predetermined behavior rule by distinguishing same from the other behavior rules. In this case, even if the operation has changed, the change in the actual behavior rule (trend) of the electric vehicle 25 is relatively small, and there is no particular need to change the behavior rule.

<Advantageous Effects>

According to the fourth embodiment, even if the user does not frequently check for a change in operation of the electric vehicle 25, the behavior rule to be corrected is displayed on the display unit 11f. Therefore, the management burden on the user can be reduced.

<<Modified Examples>>

Although the state prediction system 11 according to the present invention has been described in each embodiment hereinabove, the present invention is not limited to these disclosures, and various modifications can be made.

For example, in each embodiment, the case where the prediction unit 5 performs, using a predetermined probability density function, probability modeling of the clusters R1, R2, and so forth corresponding to the behavior rules of the electric vehicle 25 has been described, but the present invention is not limited thereto. For example, the prediction unit 5 may calculate the centers and radii of the clusters R1, R2, and so forth to specify which cluster the state of the electric vehicle 25 belongs to. Note that an average value of each component, for example, is used as the center of the cluster. Further, as the radius of the cluster, an average value of the distances to the center from each point belonging to the cluster, for example, is used. Furthermore, it is also possible to appropriately use a statistical method other than clustering.

Moreover, in each embodiment, a case where the prediction unit 5 calculates the likelihood of each behavior rule based on the average value and variance of the start SoC and the start time of the behavior has been described, but the present invention is not limited thereto. For example, even if the maximum value or the minimum value of the start SoC or the start time of the behavior is appropriately used, the likelihood of the behavior rules can be calculated using a similar method. The likelihood of the behavior rules can also be calculated based on the difference between the time when the most recent behavior of the electric vehicle 25 is started and the start time of each behavior rule. Note that the same applies to the likelihood of the behavior rules based on the start SoC.

In addition, in each embodiment, an example in which the prediction result by the prediction unit 5 is narrowed down in the same manner has been described, but the present invention is not limited thereto. That is, a plurality of prediction results may be displayed on the display unit 11f in association with the probability that a prediction result will occur.

Furthermore, in the embodiment, a case where the data acquisition unit 1 acquires the SoC historical data and the behavior historical data without particularly distinguishing between a weekday and a holiday has been described, but the present invention is not limited thereto. For example, the data acquisition unit 1 may acquire the SoC historical data or the like by distinguishing between a weekday and a holiday, or the data acquisition unit 1 may acquire the SoC historical data or the like for the most recent week.

Furthermore, in each embodiment, a case where four features, namely the behavior start time, the start SoC, the charge/discharge amount, and the behavior duration, are used as features of the behavior of the electric vehicle 25 has been described, but the present invention is not limited thereto. Further, in addition to the time when the electric vehicle 25 is connected to the charging facility 24 via the charging cable 27 and the time when the charging cable 27 is removed, the end time of charging/discharging, the SoC at the end of charging/discharging, and the like, can also be appropriately used.

In each embodiment, a case where there are three types of behavior of the electric vehicle 25, namely charging, waiting, and movement, has been described, but the present invention is not limited thereto. That is, other behaviors may be added, as appropriate, as the types of behavior of the electric vehicle 25.

In each embodiment, prediction of the state of the electric vehicle 25 (device) has been described. However, the electric vehicle may be a two-wheeled vehicle or a three-wheeled vehicle that is electrically driven in addition to a hybrid vehicle that can be charged by being plugged in. In addition, the "device" to be predicted by the state prediction system 11 may be a mobile body such as a railway vehicle, a ship, or an aircraft in addition to the electric vehicle 25, or may be a device that does not particularly move (a device for which human operation is involved in at least some of the behavior).

The embodiments may also be appropriately combined. For example, the second embodiment and the fourth embodiment may be combined, the user may input probabilities for the behavior rules (second embodiment), and the operation change detection unit 7 may display a predetermined behavior rule corresponding to an operation change by distinguishing same from the other behavior rules. In addition, a combination of the second embodiment and the third embodiment and a combination of the third embodiment and the fourth embodiment are also possible.

Furthermore, the processing executed by the state prediction system 11 or the like may be executed as a predetermined program of a computer. The foregoing program can be provided via a communication line or can be distributed by being written to a recording medium such as a CD-ROM.

In addition, each embodiment has been disclosed in detail in order to facilitate understanding of the present invention, and is not necessarily limited to an embodiment having all the described configurations. It is also possible to add, delete, or substitute other configurations for part of the configurations of the embodiments. Moreover, the above-described mechanisms and configurations are illustrated as being necessary for the description, and not all the mechanisms and configurations are necessarily illustrated in the product.

Reference Signs List

1 Data acquisition unit
2 Behavior feature extraction unit
3 Behavior rule extraction unit
4 Behavior rule correction unit
5 Prediction unit

6 Transition probability calculation unit
7 Operation change detection unit
11, 11A, 11B State prediction system
11f Display unit
11h, 11Ah, 11Bh Arithmetic processor
24 Charging facility
25 Electric vehicle (device, mobile body)
25a Battery
27 Charging cable

**Claims**

1. A state prediction system, comprising a behavior feature extraction unit that, based on behavior historical data representing a history of device behavior and charging rate historical data representing a history of charging rates of a battery of the device, extracts a feature of behavior of the device,

wherein human operation is involved in at least some of the behavior of the device, wherein
the feature includes information specifying a time and the charging rate when the device starts a predetermined behavior, and a time and the charging rate when the device ends the behavior, the state prediction system further comprising:

a behavior rule extraction unit that extracts, based on the feature, a predetermined behavior rule indicating a charging/discharging timing and a charge/discharge amount as a trend in the charging/discharging of the battery accompanying the behavior of the device;
a behavior rule correction unit that corrects the behavior rule based on a predetermined input operation by referring to a display unit displaying the behavior rule; and
a prediction unit that, in a case where the behavior rule is corrected by the behavior rule correction unit, predicts a future state of the device based on the corrected behavior rule.

2. The state prediction system according to claim 1, wherein, in a case where information indicating a date and a time when the correction of the behavior rule is reflected in processing by the prediction unit is input by means of the input operation, the prediction unit predicts the future state of the device based on the behavior rule before correction until the date and the time is reached, and predicts the future state of the device based on the corrected behavior rule beyond the date and the time.

3. The state prediction system according to claim 1, wherein

the behavior rule extraction unit classifies, based on predetermined clustering, the information including a plurality of types of the features, and extracts the classification result as the behavior rule, and
the display unit displays, in association with a type of behavior of the device, data that includes respective average values of the plurality of types of features in the classification result.

4. The state prediction system according to claim 3, wherein the correction of the behavior rule by the behavior rule correction unit includes processing to shift in position a predetermined cluster selected by means of the input operation, among a plurality of clusters generated based on the clustering.

5. The state prediction system according to claim 3, wherein the correction of the behavior rule by the behavior rule correction unit includes processing to add, in addition to a plurality of clusters generated based on the clustering, a new cluster by means of the input operation.

6. The state prediction system according to claim 1, wherein

the device is a mobile body that is charged from a charging facility via a charging cable, and
in a case where a time zone exists in which the charging rate historical data and the behavior historical data have not been acquired, the behavior feature extraction unit sets a type of behavior of the mobile body in the time zone as movement, sets a start time of the time zone as the start time of the movement, sets the charging rate acquired immediately before the start of the time zone as the charging rate at the start of the movement, sets the end time of the time zone as the end time of the movement, sets the charging rate acquired immediately after the end of the time zone as the charging rate at the end of the movement, and extracts the feature.

7. The state prediction system according to claim 1, wherein the prediction unit calculates a likelihood of each of the behavior rules based on the most recent charging rate historical data and behavior historical data of the device, specifies a behavior rule having the highest likelihood as the most recent behavior rule of the device, and repeats processing to estimate another behavior rule to be adopted by the device after that behavior rule, based on the time and the charging rate when the behavior rule ended.

8. The state prediction system according to claim 7, wherein the prediction unit specifies the type of the most recent behavior of the device based on the most recent charging rate historical data and behavior historical data of the device, and specifies, as the most recent behavior rule of the device, the behavior rule having the highest likelihood from among a plurality of the behavior rules associated with the specified behavior type.

9. The state prediction system according to claim 7, wherein

the behavior rule correction unit sets, by means of the input operation, a probability that a predetermined behavior rule will be selected in the device, in association with the behavior rule, and
the prediction unit calculates a value obtained by multiplying the probability corresponding to the predetermined behavior rule by the likelihood, specifies a behavior rule for which the value is the highest, and then repeats the processing to estimate another behavior rule to be adopted by the device after that behavior rule.

10. The state prediction system according to claim 7, further comprising a transition probability calculation unit that calculates a transition probability between behaviors of the device, wherein

the transition probability calculation unit calculates the transition probability at the time of a shift from a predetermined behavior to another type of behavior, based on the charging rate historical data and the behavior historical data, and
the prediction unit calculates a value obtained by multiplying the transition probability corresponding to a predetermined behavior rule by the likelihood, specifies the behavior rule for which value is the highest, and then repeats the processing to estimate another behavior rule to be adopted by the device after that behavior rule.

11. The state prediction system according to claim 1, further comprising an operation change detection unit that acquires operation information regarding operation of the device, and, in a case where a change in the operation is detected, specifies a behavior rule corresponding to the change in operation from among a plurality of the behavior rules, wherein
the display unit generates a display so as to distinguish the behavior rule specified by the operation change detection unit from other behavior rules.

12. The state prediction system according to claim 11, wherein, in a case where the feature is present, in the behavior rule corresponding to the change in operation, for which a change amount accompanying the change in operation is equal to or greater than a predetermined threshold value, the display unit generates a display so as to distinguish the behavior rule specified by the operation change detection unit from other behavior rules.

13. A state prediction method, comprising behavior feature extraction processing that, based on behavior historical data representing a history of device behavior and charging rate historical data representing a history of charging rates of a battery of the device, extracts a feature of behavior of the device, wherein

human operation is involved in at least some of the behavior of the device,
the feature includes information specifying the time and the charging rate when the device starts a predetermined behavior, and the time and the charging rate when the device ends the behavior, the state prediction method further comprising:

behavior rule extraction processing that, after the behavior feature extraction processing is performed, extracts, based on the feature, a predetermined behavior rule indicating a charging/discharging timing and a charge/discharge amount as a trend in the charging/discharging of the battery accompanying the behavior of the device;
behavior rule correction processing that corrects the behavior rule based on a predetermined input operation by referring to a display unit displaying the behavior rule; and
prediction processing that, in a case where the behavior rule is corrected by the behavior rule correction processing, predicts a future state of the device based on the corrected behavior rule.

14. A program for causing a computer to execute the state prediction method according to claim 13.

# FIG. 1

# FIG. 2

# FIG. 3

# FIG. 4

| EV IDENTIFICATION INFORMATION | TIME | SoC [%] |
|---|---|---|
| : | : | : |
| XXXXEV1 | 12:00 | 20.0 |
| XXXXEV1 | 12:01 | 20.1 |
| XXXXEV1 | 12:02 | 20.2 |
| XXXXEV1 | 12:03 | 20.3 |
| XXXXEV1 | 12:04 | 20.4 |
| : | : | : |

# FIG. 5

# FIG. 6

| EV IDENTIFICATION INFORMATION | BEHAVIOR | START TIME | END TIME |
|---|---|---|---|
| : | : | : | : |
| XXXXEV1 | CHARGING | 12:00 | 13:00 |
| XXXXEV1 | STANDBY | 13:00 | 14:00 |
| XXXXEV1 | CHARGING | 16:00 | 20:00 |
| : | : | : | : |

# FIG. 7

```
        ( START )
            │
            ▼
┌─────────────────────┐
│    ACQUIRE DATA     │── S101
└─────────────────────┘
            │
            ▼
┌─────────────────────┐
│    CLASSIFY DATA    │── S102
└─────────────────────┘
            │
            ▼
┌─────────────────────┐
│  EXTRACT FEATURES FOR    │── S103
│ EACH PIECE OF CLASSIFIED DATA │
└─────────────────────┘
            │
            ▼
┌─────────────────────┐
│     CLUSTER DATA     │── S104
│   BASED ON FEATURES  │
└─────────────────────┘
            │
            ▼
┌─────────────────────┐
│ EXTRACT BEHAVIOR RULES  │── S105
│     OF EACH CLUSTER     │
└─────────────────────┘
            │
            ▼
┌─────────────────────┐
│ DISPLAY BEHAVIOR RULES │── S106
└─────────────────────┘
            │
            ▼                  S107
       ╱ HAS CORRECTION ╲         No
      ⟨ INFORMATION BEEN INPUT? ⟩──────┐
       ╲               ╱             │
            │ Yes                    │
            ▼                        │
┌─────────────────────┐             │
│ CORRECT BEHAVIOR RULES │── S108    │
└─────────────────────┘             │
            │◄───────────────────────┘
            ▼
          ( A )
```

# FIG. 8

A

ACQUIRE MOST
RECENT DATA OF EV — S109

CALCULATE LIKELIHOOD
OF EACH BEHAVIOR RULE — S110

SELECT BEHAVIOR RULE
HAVING HIGHEST LIKELIHOOD — S111

SIMULATE PROBABLE
BEHAVIOR BASED ON
SELECTED BEHAVIOR RULE — S112

SELECT PROBABLE
NEXT BEHAVIOR FROM
PREDICTED EV STATE — S113

PREDICT EV STATE — S114

S115

HAS PREDICTION TIME REACHED
PREDETERMINED TIME?                    No

Yes

DISPLAY PREDICTION RESULT — S116

END

# FIG. 9

# FIG. 10

# FIG. 11

| No. | If | | | then | |
|---|---|---|---|---|---|
| | BEHAVIOR | START SoC [%] | START TIME | CHARGE/ DISCHARGE AMOUNT [kWh] | DURATION [h] |
| 1 | CHARGING | 20 | 12:00 | 50 | 1 |
| 2 | CHARGING | 30 | 16:00 | 20 | 2 |
| 3 | MOVEMENT | 60 | 08:00 | −30 | 2 |
| 4 | MOVEMENT | 50 | 20:00 | −40 | 1 |
| : | : | : | : | : | : |

# FIG. 12

# FIG. 13

# FIG. 14

```
        ┌─────────────┐
        │    START    │
        └──────┬──────┘
               │
               ▼
    ┌──────────────────────┐
    │     ACQUIRE DATA     │─── S101
    └──────────┬───────────┘
               │
               ▼
    ┌──────────────────────┐
    │    CLASSIFY DATA     │─── S102
    └──────────┬───────────┘
               │
               ▼
    ┌──────────────────────┐
    │  EXTRACT FEATURES FOR │─── S103
    │EACH PIECE OF CLASSIFIED DATA│
    └──────────┬───────────┘
               │
               ▼
  ┌──────────────────────────┐
  │CALCULATE TRANSITION PROBABILITY│─── S120
  │    BETWEEN BEHAVIORS     │
  └──────────┬───────────────┘
               │
               ▼
    ┌──────────────────────┐
    │     CLUSTER DATA     │─── S104
    │  BASED ON FEATURES   │
    └──────────┬───────────┘
               │
               ▼
    ┌──────────────────────┐
    │ EXTRACT BEHAVIOR RULES│─── S105
    │   OF EACH CLUSTER    │
    └──────────┬───────────┘
               │
               ▼
    ┌──────────────────────┐
    │ DISPLAY BEHAVIOR RULES│─── S106
    └──────────┬───────────┘
               │
               ▼                    S107
        ╱──────────────────╲        No
       ╱   HAS CORRECTION   ╲───────────┐
       ╲INFORMATION BEEN INPUT?╱        │
        ╲──────────────────╱            │
               │ Yes                    │
               ▼                        │
    ┌──────────────────────┐           │
    │CORRECT BEHAVIOR RULES │─── S108   │
    └──────────┬───────────┘◄──────────┘
               │
               ▼
            ┌─────┐
            │  A  │
            └─────┘
```

# FIG. 15

A

ACQUIRE MOST
RECENT DATA OF EV — S109

CALCULATE LIKELIHOOD
OF EACH BEHAVIOR RULE — S110

SELECT BEHAVIOR RULE
HAVING HIGHEST LIKELIHOOD — S111

SIMULATE PROBABLE
BEHAVIOR BASED ON
SELECTED BEHAVIOR RULE — S112

SELECT NEXT BEHAVIOR
BASED ON PREDICTED EV STATE
AND TRANSITION PROBABILITY — S113a

PREDICT EV STATE — S114

S115
HAS PREDICTION TIME REACHED
PREDETERMINED TIME? — No

Yes

DISPLAY PREDICTION RESULT — S116

END

# FIG. 16

11B

STATE PREDICTION SYSTEM

11Bh

ARITHMETIC PROCESSOR

1

DATA
ACQUISITION UNIT ← DATA

7

OPERATION
CHANGE
DETECTION UNIT ← OPERATION
INFORMATION

2

BEHAVIOR FEATURE
EXTRACTION UNIT

11g

STORAGE
UNIT

3

BEHAVIOR RULE
EXTRACTION UNIT

11f

DISPLAY
UNIT

11d

INPUT UNIT

4

BEHAVIOR RULE
CORRECTION UNIT

5

PREDICTION UNIT

11k

OUTPUT UNIT

## INTERNATIONAL SEARCH REPORT

| International application No. |
|---|
| **PCT/JP2021/044615** |

**A.    CLASSIFICATION OF SUBJECT MATTER**

*H02J 13/00*(2006.01)i; *G06Q 50/30*(2012.01)i; *H02J 3/00*(2006.01)i; *H02J 3/38*(2006.01)i; *G06Q 10/04*(2012.01)i
FI:    G06Q50/30; H02J3/00 130; H02J3/38 110; H02J13/00 301A; H02J13/00 311R; H02J3/00 170; G06Q10/04

According to International Patent Classification (IPC) or to both national classification and IPC

**B.    FIELDS SEARCHED**

Minimum documentation searched (classification system followed by classification symbols)

H02J13/00; G06Q10/04; G06Q50/30; H02J3/00; H02J3/38

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| A | JP 2014-038047 A (TOSHIBA CORP.) 27 February 2014 (2014-02-27)<br>entire text, all drawings | 1-14 |
| A | WO 2020/026900 A1 (TOYOTA INDUSTRIES CORP.) 06 February 2020 (2020-02-06)<br>entire text, all drawings | 1-14 |
| A | JP 2018-072083 A (TOSHIBA CORP.) 10 May 2018 (2018-05-10)<br>entire text, all drawings | 1-14 |
| A | JP 2015-070709 A (NISSAN MOTOR CO., LTD.) 13 April 2015 (2015-04-13)<br>entire text, all drawings | 1-14 |

☐ Further documents are listed in the continuation of Box C.        ☑ See patent family annex.

* Special categories of cited documents:
"A"    document defining the general state of the art which is not considered to be of particular relevance
"E"    earlier application or patent but published on or after the international filing date
"L"    document which may throw doubts on priority claim(s) or which is cited to establish the publication date of another citation or other special reason (as specified)
"O"    document referring to an oral disclosure, use, exhibition or other means
"P"    document published prior to the international filing date but later than the priority date claimed

"T"    later document published after the international filing date or priority date and not in conflict with the application but cited to understand the principle or theory underlying the invention
"X"    document of particular relevance; the claimed invention cannot be considered novel or cannot be considered to involve an inventive step when the document is taken alone
"Y"    document of particular relevance; the claimed invention cannot be considered to involve an inventive step when the document is combined with one or more other such documents, such combination being obvious to a person skilled in the art
"&"    document member of the same patent family

| Date of the actual completion of the international search | Date of mailing of the international search report |
|---|---|
| **03 February 2022** | **15 February 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2021/044615**

| Patent document cited in search report | | | Publication date (day/month/year) | Patent family member(s) | | | Publication date (day/month/year) |
|---|---|---|---|---|---|---|---|
| JP | 2014-038047 | A | 27 February 2014 | US | 2015/0151637 | A1 | |
| | | | | entire text, all drawings | | | |
| | | | | WO | 2014/027699 | A1 | |
| | | | | EP | 2887304 | A1 | |
| | | | | CN | 104620274 | A | |
| WO | 2020/026900 | A1 | 06 February 2020 | JP | 2020-22262 | A | |
| | | | | EP | 3832837 | A1 | |
| | | | | entire text, all drawings | | | |
| JP | 2018-072083 | A | 10 May 2018 | (Family: none) | | | |
| JP | 2015-070709 | A | 13 April 2015 | (Family: none) | | | |

Form PCT/ISA/210 (patent family annex) (January 2015)

**REFERENCES CITED IN THE DESCRIPTION**

**Patent documents cited in the description**

- JP 6574466 A
- JP 5911783 A